# EUROPEAN PATENT SPECIFICATION

(11) **EP 1 087 899 B1**
(45) Date of publication and mention of the grant of the patent: **10.12.2003**
(21) Application number: 99920439.9
(22) Date of filing: 28.04.1999
(51) Int. Cl.: B65G 47/91

(54) **A PARTICLE RETRIEVING APPARATUS**
VORRICHTUNG ZUR ENTNAHME VON PARTIKELN
APPAREIL D'EXTRACTION DE PARTICULES

(30) Priority: 13.05.1998 ZA 9804028
(43) Date of publication of application: 04.04.2001
(73) Proprietor: Element Six (PTY) Ltd, 1559 Springs (ZA)
(72) Inventor: ADDISON, Timothy, Patrick, Gerard, Vorna Valley, Midrand 1686 (ZA)
(74) Representative: Barlow, Roy James
(86) International application number: ZA9900024
(87) International publication number: WO99058434

(56) References cited:
- EP-A- 0 091 720
- EP-A- 0 167 630
- EP-A- 0 363 160
- US-A- 4 379 510

## Description

### BACKGROUND TO THE INVENTION

THIS invention relates to a retrieving apparatus, and in particular to a retrieving apparatus for retrieving and sampling particulate material. Such an apparatus, corresponding to the preamble of claim 1, is disclosed by US-A-4379510.

Co-pending South African patent application 97/8874 discloses a method of locating individual particles, and in particular diamond particles, on a target surface for quality testing purposes. In an initial step in the process, a hollow vacuum needle is used to deliver individual diamond particles from a batch in a sampling receptacle to the target surface. The needle is lowered slowly into the stack of particles until the needle tip is about 0.1mm from the rigidly mounted particle receptacle. As a result, the needle tends to wear rapidly, and diamond particles are sometimes forced into the mouth of the hollow needle, thereby jamming it.

If the needle is speeded up so as to ensure that sampling takes place more quickly, particles are often scattered out of the receptacle, and the wear and jamming problems are increased.

In both scenarios, as a result of the inter-action arising between the needle and the particles as the needle tip dips into the batch of particles, the tip of the needle tends to abrade and/or bend after a relatively short time, and therefore needs to be replaced regularly.

### SUMMARY OF THE INVENTION

According to a first aspect of the invention there is provided a particle retrieving apparatus comprising a particle receptacle for receiving particulate material, a collecting probe for retrieving particles from the particulate material in the receptacle, drive means for driving the probe, a sensing arrangement for sensing the contact position of the probe as it comes into contact with the particulate material, recording means for recording the contact position of the probe and control means for controlling the motion of the probe via the drive means in a subsequent retrieval cycle on the basis of the recorded contact position.

In a preferred form of the invention, the particle receptacle is supported on the sensing arrangement, such that the particle receptacle is displaceable in response to initial contact between the probe and the particulate material, with the sensing arrangement including a sensor for sensing such displacement.

Conveniently, the sensing arrangement comprises a balance having a balance arm sensitive to the probe contacting the particulate matter, with the sensor being arranged to sense the resultant displacement of the balance arm.

Advantageously, the balance arm includes adjustment means for adjusting the balance arm to a position of equilibrium in response to the variations in loading of the receptacle, the sensor being arranged to sense deviation of the balance arm off the position of equilibrium.

Typically, the balance arm is suspended pivotably from a support table, the table being formed with an aperture through which the particle receptacle is arranged to protrude.

The collecting probe may comprise a hollow vacuum needle which is driven reciprocally along its axis by the drive means, the vacuum being sufficient to lift individual particles and the inner diameter of the hollow needle being smaller than the average particle size.

Preferably, the control means is responsive to a signal from the sensing arrangement, and is arranged substantially contemporaneously to halt the probe via the drive means and to enable the halted position of the probe to be recorded in the recording means.

The invention extends to a method of retrieving a particle from particulate material in a receptacle comprising the steps of:
a) advancing a collecting probe towards the particulate material;
b) sensing a first position at which the probe makes contact with the particulate material;
c) recording the first position; and
d) using the record to provide a first reference position to control the motion of the probe during a subsequent particle retrieval cycle as it approaches the particulate material.

Advantageously, the method includes the steps of retrieving a first particle with which the probe has first made contact, releasing the first particle, and, during the subsequent retrieval cycle, of advancing the probe towards the particulate material at a first velocity and then at a second reduced velocity which is lower than the first velocity as it reaches the first reference position so that it travels relatively slowly just before contacting the particulate material.

Typically, the method includes the further iterative steps of updating the reference position for a particular collection cycle on the basis of the previously stored reference data corresponding to the position at which the probe last contacted the particulate material.

### BRIEF DESCRIPTION OF THE DRAWINGS

- **Figure 1**: shows a partly cross-sectional side view of a particle sampling apparatus of the invention; and
- **Figure 2**: shows a partly schematic detail of a particle receptacle or hopper forming part of the particle sampling apparatus of Figure 1.

### DESCRIPTION OF EMBODIMENTS

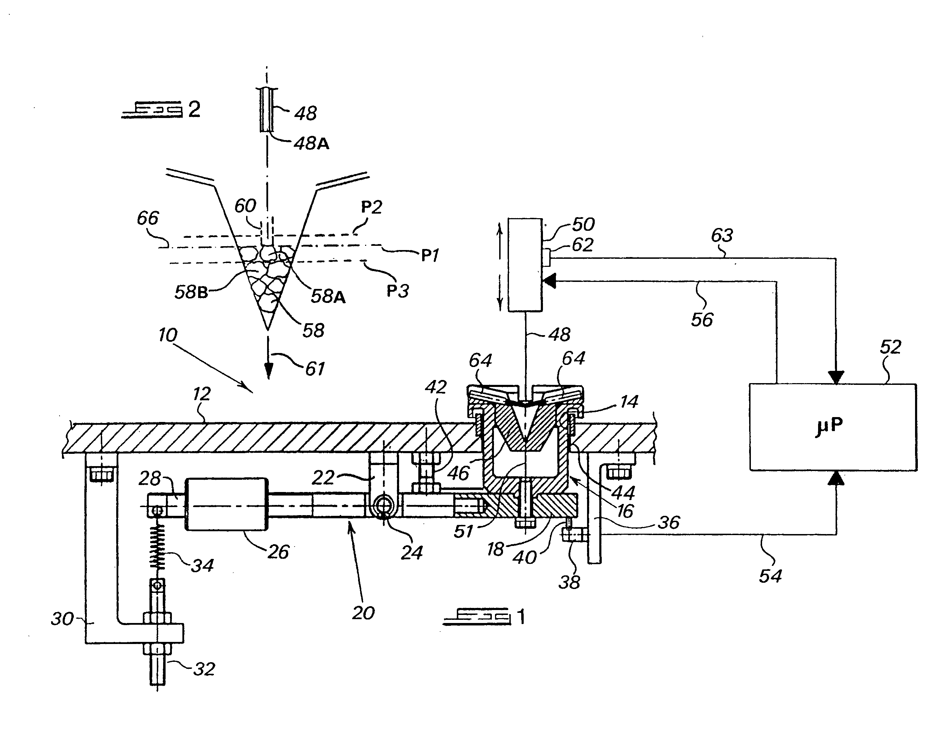

Referring first to Figure 1, a particle retrieving apparatus 10 comprises a fixed table 12 having an aperture 14 formed therein for loosely receiving a hopper assembly 16. The hopper assembly 16 is in turn bolted to a support end 18 of a balance arm 20 suspended pivotably from the table 12 via a trunnion assembly 22. A counterweight 26 is located towards the opposite adjusting 28 end of the balance arm 18. A first mounting bracket 30 is bolted to the underside of the table 12, and carries an adjusting screw assembly 32 which is connected to the adjusting end 28 of the balance arm 18 via a tension spring 34. A second bracket 36 is bolted to the underside of the table adjacent the hopper assembly 16, and carries an optical switch 38 which is triggered by means of an optical switch breaker 40 extending downwardly from the free end of the arm 18. An adjustable stopper 42 is used to adjust the resting height of the hopper assembly 16 and to prevent overshoot by pivoting of the balance arm 18 on which the hopper assembly is supported.

The hopper assembly 16 comprises an outer housing 44 defining an opening for receiving a cone-shaped hopper 46. A retrieval probe in the form of a hollow steel vacuum needle or cannula 48 is vertically aligned so that it points towards the base of the cone. The needle is carried on a reciprocating electric servo-actuator 50, which may also be in the form of a pneumatic actuator, for controlling reciprocal movement of the needle along its axis 51. A central microprocessor-based controller 52 is connected to the optical switch 38 via a signal input lead 54, and a signal output lead 56 extends from the controller to the reciprocating actuator 50, with output signals from the controller controlling the movement of the needle 48 via the reciprocating actuator 50. The micro-processor is typically a PLC or PC which is programmed to control the position and velocity of the needle, with the velocity and position profile being optimised for each different particle size and type.

In use, the sampling apparatus is operated in the following manner. A batch of particulate matter requiring sampling, which in the particular example comprises diamond particles 58 having an average particle size of less than 1,2mm, and preferably 200µm to 600µm, is deposited in the hopper 46. The corresponding needle typically has an outer diameter corresponding to or slightly less than the average particle size. The adjusting screw assembly 32, which takes the form of a fixed threaded nut 32.1 mounted to the underside of the table 12, and a bolt 32.2, the threaded shank of which is screwed into and out of the nut, is then used to fine-tune the balance via the spring 34 to a horizontal position of equilibrium, in which the breaker 40 is just clear of the optical switch. The microprocessor-based controller 52 controls a first downward stroke of the needle 48 in such a way that it descends slowly to a position indicated in broken outline at 60, in which the tip 48A of the needle 48 contacts one of the uppermost diamond particles 58A which is in line with the needle. The downward movement of the needle against the particle 58A causes the support end 18 of the balance arm to move downwards in the direction of arrow 61, which in turn causes the breaker 40 to activate the optical switch 38 and signal the controller 52.

The controller in turn sends an output "stop" signal via the output lead 56 to the reciprocating actuator 50, which immediately halts the downward stroke of the needle 48. The exact position of the tip of the needle is then fed into the controller 52 from a displacement transducer 62 which is attached to the reciprocating actuator 50 via an input lead 63 and this value is stored in the micro-controller as a datum value. A vacuum, which is applied to the tubular vacuum needle 48 just before the needle reaches the particle, captures the particle 58A as the needle tip contracts it, after which the needle commences an upward or withdrawal stroke. An array of tickler brushes 64 serve to ensure that only a single diamond particle is held captive by the vacuum needle by brushing off all other particles which may have adhered to the needle, typically as a result of static charge, as it is raised. The diamond particle is then deposited on a crushing anvil, measuring device or similar device.

In the next downward stroke, the needle is driven downwardly and relatively rapidly to the position P1 (indicated by horizontal broken line 66) which has been stored in the controller 52. Alternatively, the needle may be programmed via the controller to terminate an initial portion of its subsequent downward stroke at a slightly higher position P2 so as to ensure that there is no possibility of initial contact being made with any of the diamond particles. The controller then causes the downward velocity of the needle 48 to be slowed down to a crawl velocity of typically 10% of the initial velocity so that the tip 48A of the needle gently contacts rather than plunges into a subsequent particle such as particle 58B, which is the next particle in the "stack" to be sampled at position P3. The position in which the downward stroke of the needle terminates may be stored during each sampling or collecting cycle, as a result of which the datum point is continuously updated. An advantage of this procedure is that sampling may take place relatively quickly, in that the speed of the needle is not compromised during its major portion of travel. At the same time, the tip of the needle does not abrade as quickly, or get clogged by smaller particles, as the downward speed of the needle is considerably slowed down over the critical portion of the sample collecting cycle. It has, for example, been found that by using the above method and apparatus, a collecting needle can last up to twenty times longer.

The sampling apparatus of the invention is not confined to the sampling of particulate diamonds, but may be used to sample any particulate matter in a situation where sampling speed is important, whilst at the same time either the particles being sampled or the sampling probe is prone to being damaged if the probe contacts the particle at anything but relatively low speeds. The sensing arrangement may be any type of floating arrangement, and is not confined to a balance arm, with the main requirement being that the floating arrangement allows displacement of the particle receptacle in response to initial contact between the probe and the particulate material.

## Claims

1. A particle retrieving apparatus comprising a particle receptacle (46) for receiving particulate material, a collecting probe (48) for retrieving particles from the particulate material in the receptacle, drive means (50) for driving the probe, **characterized by** a sensing arrangement (20) for sensing the contact position of the probe as it comes into contact with the particulate material, recording means (38,40) for recording the contact position of the probe and control means (52) for controlling the motion of the probe via the drive means in a subsequent retrieval cycle on the basis of the recorded contact position.

2. A particle retrieving apparatus according to claim 1 in which the particle receptacle is supported on the sensing arrangement, such that the particle receptacle is displaceable in response to initial contact between the probe and the particulate material, with the sensing arrangement including a sensor for sensing such displacement.

3. A particle retrieving apparatus according to claim 2 in which the sensing arrangement comprises a balance having a balance arm sensitive to the probe contacting the particulate matter, with the sensor being arranged to sense the resultant displacement of the balance arm.

4. A particle retrieving apparatus according to claim 3 in which the balance arm includes adjustment means (26) for adjusting the balance arm to a position of equilibrium in response to the variations in loading of the receptacle, the sensor being arranged to sense deviation of the balance arm off the position of equilibrium.

5. A particle retrieving apparatus according to either one of claims 3 or 4 in which the balance arm is suspended pivotably from a support table (12), the table being formed with an aperture (14) through which the particle receptacle is arranged to protrude.

6. A particle retrieving apparatus according to any one of the preceding claims in which the collecting probe comprises a hollow vacuum needle (48) which is driven reciprocally along its axis by the drive means (50), the vacuum being sufficient to lift individual particles and the inner diameter of the hollow needle being smaller than the average particle size.

7. A particle retrieving apparatus according to any one of the preceding claims in which the control means (52) is responsive to a signal from the sensing arrangement, and is arranged substantially contemporaneously to halt the probe via the drive means and to enable the halted position of the probe to be recorded in the recording means.

8. A method of retrieving a particle from particulate material in a receptacle comprising the steps of:
a) advancing a collecting probe towards the particulate material;
b) sensing a first position at which the probe makes contact with the particulate material;
c) recording the first position; and
d) using the record to provide a first reference position to control the motion of the probe during a subsequent particle retrieval cycle as it approaches the particulate material.

9. A method according to claim 8 which includes the steps of retrieving a first particle with which the probe has first made contact, releasing the first particle, and, during the subsequent retrieval cycle, of advancing the probe towards the particulate material at a first velocity and then at a second reduced velocity which is lower than the first velocity as it reaches the first reference position so that it travels relatively slowly just before contacting the particulate material.

10. A method according to claim 9 which includes the further iterative steps of updating the reference position for a particular collection cycle on the basis of the previously stored reference data corresponding to the position at which the probe last contacted the particulate material.

## Patentansprüche

1. Teilchenentnahmevorrichtung, umfassend: ein Teilchensammelgefäß (46) zur Aufnahme von Teilchenmaterial, eine Sammelsonde (48) zur Entnahme von Teilchen aus dem Teilchenmaterial in das Sammelgefäß, eine Antriebseinrichtung (50) zum Antrieb der Sonde, **gekennzeichnet durch** eine Abtastanordnung (20) zum Abtasten der Kontaktposition der Sonde, wenn sie in Kontakt mit dem Teilchenmaterial kommt, eine Aufzeichnungseinrichtung (38, 40) zum Aufzeichnen der Kontaktposition der Sonde und eine Steuereinrichtung (52) zur Steuerung der Bewegung der Sonde über die Antriebseinrichtung in einem nachfolgenden Entnahmezyklus auf der Grundlage der aufgezeichneten Kontaktposition.

2. Teilchenentnahmevorrichtung nach Anspruch 1, in der das Teilchensammelgefäß auf der Abtastanordnung so gehalten wird, daß das Teilchensammelgefäß als Reaktion auf einen Anfangskontakt zwischen der Sonde und dem Teilchenmaterial verstellbar ist, wobei die Abtastanordnung einen Sensor zum Abtasten einer solchen Verstellung aufweist.

3. Teilchenentnahmevorrichtung nach Anspruch 2, in der die Abtastanordnung eine Waage aufweist, die einen Waagebalken aufweist, der empfindlich darauf ist, daß die Sonde den Teilchenstoff berührt, wobei der Sensor eingerichtet ist, die resultierende Verstellung des waagebalkens abzutasten.

4. Teilchenentnahmevorrichtung nach Anspruch 3, in der der Waagebalken, eine Einstelleinrichtung (25) zur Einstellung des Waagebalkens auf eine Gleichgewichtsposition als Reaktion auf die Variationen der Beladung des Sammelgefäßes aufweist, wobei der Sensor eingerichtet ist, eine Abweichung des Waagebalkens aus der Gleichgewichtsposition abzutasten.

5. Teilchenentnahmevorrichtung nach einem der Ansprüche 3 oder 4, in der der Waagebalken drehbar an einem Haltetisch (12) aufgehängt ist, wobei der Tisch mit einer Öffnung (14) ausgebildet ist, durch die das Teilchensammelgefäß so angeordnet ist, daß es vorsteht.

6. Teilchenentnahmevorrichtung nach einem der vorhergehenden Ansprüche, in der die Sammelsonde eine Unterdruck-Hohlnadel (48) aufweist, die wechselweise längs ihrer Achse durch die Antriebseinrichtung (50) angetrieben wird, wobei der Unterdruck ausreichend ist, um einzelne Teilchen anzuheben, und der Innendurchmesser der Hohlnadel kleiner als die durchschnittliche Teilchengröße ist.

7. Teilchenentnahmevorrichtung nach einem der vorhergehenden Ansprüche, in der die Steuereinrichtung (52) auf ein Signal aus der Abtastanordnung anspricht und eingerichtet ist, im wesentlichen gleichzeitig die Sonde über die Antriebseinrichtung anzuhalten und es zu ermöglichen, daß die Anhalteposition der Sonde in der Aufzeichnungseinrichtung aufgezeichnet wird.

8. Verfahren zur Entnahme eines Teilchens aus Teilchenmaterial in ein Sammelgefäß, umfassend die Schritte:
a) Vorschieben einer Sammelsonde zum Teilchenmaterial;
b) Abtasten einer ersten Position, an der die Sonde mit dem Teilchenmaterial Kontakt aufnimmt;
c) Aufzeichnen der ersten Position; und
d) verwenden der Aufzeichnung, um eine erste Referenzposition bereitzustellen, um die Bewegung der Sonde während eines nachfolgenden Teilchenentnahmezyklus zu steuern, wenn sie sich dem Teilchenmaterial nähert.

9. Verfahren nach Anspruch 8, das die Schritte aufweist: Entnahme eines ersten Teilchens, mit dem die Sonde zuerst Kontakt aufgenommen hat, Freigeben des ersten Teilchens, und während des nachfolgenden Entnahmezyklus, Vorschieben der Sonde zum Teilchenmaterial mit einer ersten Geschwindigkeit und dann mit einer zweiten reduzierten Geschwindigkeit, die niedriger als die erste Geschwindigkeit ist, wenn sie die erste Referenzposition erreicht, so daß sie sich kurz bevor sie das Teilchenmaterial berührt verhältnismäßig langsam bewegt.

10. Verfahren nach Anspruch 9, das die weiteren iterativen Schritte der Aktualisierung der Referenzposition für einen besonderen Sammelzyklus auf der Grundlage der vorhergehend gespeicherten Referenzdaten aufweist, die der Position entsprechen, an der die Sonde zuletzt das Teilchenmaterial berührte.

## Revendications

1. Appareil de récupération de particules comprenant un réceptacle (46) pour particules destiné à recevoir une matière en particules, une sonde de recueil (48) servant à récupérer des particules à partir de la matière en particules se trouvant dans le réceptacle, un moyen d'entraînement (50) servant à entraîner la sonde, **caractérisé par** un ensemble de détection (20) servant à détecter la position de contact de la sonde lorsque celle-ci vient en contact avec la matière en particules, un moyen d'enregistrement (38, 40) servant à enregistrer la position de contact de la sonde, et un moyen de commande (52) servant à commander le mouvement de la sonde par l'intermédiaire du moyen d'entraînement lors un cycle de récupération ultérieur sur la base de la position de contact enregistrée.

2. Appareil de récupération de particules selon la revendication 1, où le réceptacle de particules est soutenu par l'ensemble de détection, de façon que le réceptacle de particules puisse être déplacé en réaction à un contact initial entre la sonde et la matière en particules, l'ensemble de détection comportant un détecteur qui sert à détecter ce déplacement.

3. Appareil de récupération de particules selon la revendication 2, où l'ensemble de détection comprend une balance possédant un bras de balance sensible au fait que la sonde vient en contact avec la matière en particules, le détecteur étant conçu pour détecter le déplacement résultant du bras de la balance.

4. Appareil de récupération de particules selon la revendication 3, où le bras de la balance comporte un moyen d'ajustement (26) servant à ajuster le bras de la balance en une position d'équilibre en réaction aux variations intervenant dans le chargement du réceptacle, le détecteur étant conçu pour détecter un écart du bras de la balance par rapport à la position d'équilibre.

5. Appareil de récupération de particules selon la revendication 3 ou 4, où le bras de la balance est suspendu de manière pivotante à une table de support (12), la table étant dotée d'une ouverture (14) à travers laquelle le réceptacle de particules est destiné à faire saillie.

6. Appareil de récupération de particules selon l'une quelconque des revendications précédentes, où la sonde de recueil comprend une aiguille d'aspiration creuse (48) qui est entraînée en un mouvement de va-et-vient suivant son axe par le moyen d'entraînement (50), l'aspiration étant suffisante pour soulever des particules isolées et le diamètre interne de l'aiguille creuse étant plus petit que la taille moyenne des particules.

7. Appareil de récupération de particules selon l'une quelconque des revendications précédentes, où le moyen de commande (52) réagit à un signal venant de l'ensemble de détection et est conçu pour, de manière sensiblement simultanée, arrêter la sonde par l'intermédiaire du moyen d'entraînement et permettre que la position de l'arrêt de la sonde soit enregistrée dans le moyen d'enregistrement.

8. Procédé de récupération d'une particule à partir d'une matière en particules se trouvant dans un réceptacle, comprenant les opérations suivantes :
a) faire avancer une sonde de recueil vers la mâtière en particules ;
b) détecter une première position dans laquelle la sonde établit un contact avec la matière en particules ;
c) enregistrer la première position ; et
d) utiliser l'enregistrement pour produire une première position de référence afin de commander le mouvement de la sonde pendant un cycle ultérieur de' récupération de particules lorsque celle-ci approche de la matière en particules.

9. Procédé selon la revendication 8, comportant les opérations qui consistent à récupérer une première particule avec laquelle la sonde a en premier lieu établi un contact, relâcher la première particule, et, pendant le cycle ultérieur de récupération, faire avancer la sonde en direction de la matière en particules avec une première vitesse, puis avec une deuxième vitesse, réduite, qui est inférieure à la première vitesse, lorsqu'elle atteint la première position de' référence, de manière à se déplacer relativement lentement juste avant le contact avec la matière en particules.

10. Procédé selon la revendication 9, qui comporte les opérations intératives supplémentaires consistant à mettre à jour la position de référence pour un cycle de recueil particulier sur la base des données de référence précédemment stockées, en correspondance avec la position à laquelle la sonde a en dernier établi un contact avec la matière en particules.
